# FASCICULE DE BREVET EUROPEEN

(11) **EP 3 788 527 B1**
(45) Date de publication et mention de la délivrance du brevet: **28.01.2026**
(21) Numéro de dépôt: 19726463.3
(22) Date de dépôt: 30.04.2019
(51) Int. Cl.: G06F 21/44, H04W 12/06

(54) **AUTHENTIFICATION MUTUELLE D'UN DISPOSITIF OU D'UN SYSTÈME CONTENANT DES DONNÉES SENSIBLES OU CONFIDENTIELLES COMMANDABLE PAR UN UTILISATEUR**
GEGENSEITIGE AUTHENTIFIZIERUNG VON BENUTZERSTEUERBARER VORRICHTUNG ODER SYSTEM MIT SENSIBLEN ODER VERTRAULICHEN DATEN
MUTUAL AUTHENTICATION OF A USER-CONTROLLABLE DEVICE OR SYSTEM CONTAINING SENSITIVE OR CONFIDENTIAL DATA

(30) Priorité: 30.04.2018 FR 1870507
(43) Date de publication de la demande: 10.03.2021
(73) Titulaire: Ledger, SAS, 75002 Paris (FR)
(72) Inventeur: BACCA, Nicolas, 92400 Courbevoie (FR); TOMAZ, Olivier, 91400 Orsay (FR)
(74) Mandataire: Marchand, André
(86) Numéro de dépôt international: PCT/FR2019/000064
(87) Numéro de publication internationale: WO 2019/211533

(56) Documents cités:
- FR-A1- 2 893 732
- FR-A1- 2 998 687
- US-A1- 2004 177 280

## Description

L'invention est relative à l'authentification d'un dispositif ou d'un système contenant des données sensibles ou confidentielles et elle a plus spécialement pour objet un procédé d'authentification mutuelle d'un dispositif ou d'un système électronique (également informatique et communicant) fonctionnel, commandable par un utilisateur, un procédé d'exploitation d'un tel dispositif ou d'un tel système, et un dispositif ou un système spécialement agencé pour la mise en œuvre du procédé d'authentification ou du procédé d'exploitation.

Dans le cadre de l'invention, l'expression « dispositif électronique fonctionnel » doit être comprise comme étant par exemple un terminal de paiement, alors que l'expression « système électronique fonctionnel » doit être comprise comme signifiant un ensemble fonctionnel comportant plusieurs dispositifs pouvant être associés fonctionnellement entre eux notamment en chaîne fonctionnelle, tel que par exemple un terminal de paiement et un serveur distant.

Le terme « fonctionnel » qualifiant un tel dispositif ou un tel système doit être compris comme signifiant, au sens large, que, dans une phase opérationnelle, il fonctionne pour exécuter une certaine opération (que l'on peut aussi appeler tâche, transaction, ou analogue), laquelle opération est spécifique et de nature à procurer finalement à l'utilisateur un service déterminé, comme par exemple une commande, un paiement, ou analogue.

Le terme « commandable » associé à utilisateur et relativement à un dispositif ou un système doit être compris comme signifiant que ce dispositif ou ce système est agencé de sorte que son fonctionnement est déclenché par l'utilisateur, notamment dans la phase opérationnelle.

Les termes « dispositif » et « système » signifient par ellipse, respectivement, dispositif électronique fonctionnel et système électronique fonctionnel.

Dans le cadre de l'invention, le terme « authentification » doit être compris comme signifiant un processus de vérification de l'authenticité. Le terme « authenticité » doit être compris comme signifiant légitimité, conformité à ce qui est attendu, qui est véridique, fait foi et ne peut être mis en doute, ou encore auquel on peut se fier. L'expression « authentification mutuelle » concernant le dispositif ou le système électronique fonctionnel commandable par un utilisateur doit être compris comme se rapportant à la vérification de l'authenticité du dispositif ou du système par l'utilisateur et, en combinaison, la vérification de l'authenticité de l'utilisateur par le dispositif ou le système. Ainsi, l'authentification, objet de l'invention, est, d'abord, la vérification que le dispositif ou le système est bien le bon dispositif ou le bon système et, ensuite, que l'utilisateur est bien le bon utilisateur. Par suite, l'authentification mutuelle vise à sécuriser l'opération exécutée et le service finalement procuré à l'utilisateur, y compris pour l'utilisateur.

Dans le cadre de l'invention, le terme « donnée » doit être compris comme signifiant toute information, code, ou autre, qui est spécifique et conditionne le fonctionnement du dispositif ou du système en vue d'exécuter l'opération spécifique pour procurer à l'utilisateur le service déterminé.

Les termes « sensible » et « confidentiel » doivent être compris comme qualifiant une donnée qui ne doit pas être connue, révélée ou accessible, selon les cas, autrement que par le dispositif ou le système authentique ou bien par l'utilisateur authentique, faute de quoi l'opération exécutée et finalement le service procuré à l'utilisateur ne seraient pas ou pourraient ne pas être sécurisés.

Tel est le contexte de l'invention et telle est l'interprétation des termes utilisés dans l'ensemble du texte.

L'homme du métier connaît déjà des processus d'authentification pour des systèmes informatiques et de télécommunication. Par exemple l'utilisateur authentique d'un téléphone portable pourvu d'une carte SIM (pour Subscriber Identity Module) dispose d'un code PIN personnel (pour Personal Identification Number) qui protège la carte SIM contre toute utilisation non autorisée. Le cas échéant, il est prévu un second code, le code PUK (pour PIN Unlock Key), qui a pour seule fonction de débloquer la carte SIM lorsqu'elle a été bloquée par suite d'une séquence de (trois par exemple) saisies erronées. Le document US 3 905 461 décrit par exemple un équipement de contrôle d'accès au moyen d'un jeton codé dont dispose l'utilisateur authentique. Ou, un certificat d'authenticité active un cadenas dans le but d'assurer une connexion sécurisée comme typiquement pour des transactions financières, du transfert de données, etc. Le document EP 2 431 904 décrit un système d'authentification connu sous l'expression authentification question-réponse, qui repose sur une question de défi et la vérification de l'exactitude de la réponse à cette question de défi. Le document EP 3 035 640 décrit un procédé d'authentification d'un premier dispositif exécuté par un second dispositif par un processus d'authentification question-réponse. La simple identification, par exemple d'un utilisateur, de sorte à établir son identité ne vaut pas authentification de l'utilisateur (voir EP 2 278 538). De la même manière, la simple identification par l'utilisateur d'un dispositif ou d'un système ne garantit pas à l'utilisateur que ce dispositif ou ce système soit authentique. Par suite, si, par exemple, le dispositif ou le système authentique a été remplacé par un dispositif ou système factice, l'exploitation par l'utilisateur de ce dispositif ou de ce système va conduire l'utilisateur à communiquer à ce dispositif ou à ce système un code secret ou des données sensibles ou confidentielles, ou analogue, qui pourront alors être récupérés par un attaquant qui pourra les utiliser frauduleusement, au lieu et place de l'utilisateur authentique. Le document FR 2 893 732 A1 (TRUSTED LOGIC SA [FR]) 25 mai 2007 (2007-05-25) divulgue un système réagissant à une combinaison secrète d'actions de l'utilisateur, utilisant soit le clavier, soit la souris, et déclenchant ainsi un événement, tel que l'affichage d'une image spécifique. La correspondance entre les événements et les combinaisons secrètes est personnalisée selon un mode particulier. L'utilisateur, une fois l'appareil authentifié, peut alors fournir ses identifiants pour sa propre authentification.

Le document FR 2 998 687 A1 (OBERTHUR TECHNOLOGIES [FR]) 30 mai 2014 (2014-05-30) divulgue une authentification d'utilisateur effectuée en mode sécurisé : Le système adapte l'interface utilisateur contrôlée par le mode sécurisé avec des informations secrètes spécifiques à l'utilisateur afin d'éviter le spoofing de l'interface. La configuration du secret partagé se fait lors du premier démarrage ou en mode configuration. Par exemple, dans les applications de paiement, démarrées par une application de navigateur, le secret de l'utilisateur (image, son, couleur, vibration, police de caractère) est affiché au premier plan.

Le document US 2004/177280 A1 (MARUYAMA HIROSHI [JP] ET AL) 9 septembre 2004 (2004-09-09) divulgue une méthode qui, lorsque l'utilisateur saisit une partie de son mot de passe, affiche des caractères de confirmation, correspondant à son mot de passe dans une zone différente. Si l'utilisateur entre des informations incorrectes (comme un mauvais choix d'images dans le cas d'une connexion par image), d'autres caractères sont affichés en réponse. Le système peut être connecté de manière sécurisée (ou cryptée) à un serveur, qui vérifie les parties du mot de passe et renvoie des caractères de confirmation ou non-confirmation. Les informations de confirmation indiquent à l'utilisateur que l'appareil d'authentification est valide. L'affichage d'informations de confirmation, connues de l'utilisateur à l'avance, lorsque la première partie du mot de passe est correcte confirme ainsi la validité de l'appareil.

Le problème à la base de l'invention est, donc, s'agissant d'un dispositif ou d'un système électronique fonctionnel, commandable par un utilisateur, d'assurer une authentification mutuelle, c'est-à-dire de vérifier que le dispositif ou le système est bien le bon dispositif ou le bon système et que l'utilisateur est bien le bon utilisateur, de sorte que l'opération exécutée par ce dispositif ou par ce système et finalement le service procuré à l'utilisateur soient garantis sécurisés, y compris pour l'utilisateur.

L'invention apporte une solution à ce problème en prévoyant, avant la phase opérationnelle d'exécution d'une opération, laquelle phase opérationnelle inclut une étape où le dispositif ou le système authentifie l'utilisateur, et dans laquelle les données sensibles ou confidentielles sont accessibles, une phase préalable d'authentification du dispositif ou du système, dans laquelle l'utilisateur vérifie l'authenticité du dispositif ou du système, la phase opérationnelle étant conditionnelle dans la mesure où elle ne peut être réalisée que si et seulement si la phase préalable d'authentification du dispositif ou du système a été préalablement exécutée et que, dans cette phase préalable d'authentification du dispositif ou du système, le dispositif ou le système a été effectivement authentifié par l'utilisateur. C'est ainsi qu'est réalisée une double authentification et qu'est assurée la sécurisation de l'opération exécutée par le dispositif ou par le système et finalement le service procuré à l'utilisateur.

Ci-après, un exposé de l'invention.

Selon un premier aspect, l'invention a pour objet un procédé d'authentification mutuelle d'un dispositif électronique fonctionnel commandable et de son utilisateur, comprenant une phase préliminaire de configuration (SDCP) du dispositif (DE) définissant les modalités de la vérification de son authenticité, l'utilisateur pouvant commander ensuite le dispositif afin qu'il lui procure un service déterminé, le dispositif contenant des données sensibles ou confidentielles et étant agencé de manière à
- dans une phase opérationnelle déclenchée par l'utilisateur et incluant une étape préliminaire d'authentification de l'utilisateur par le dispositif -, exécuter une opération spécifique appropriée pour procurer le service, le procédé comportant, en outre, avant toute phase opérationnelle, une phase préalable d'authentification du dispositif dans laquelle est vérifiée l'authenticité du dispositif, de sorte que :
- si à l'issue de la phase préalable d'authentification du dispositif, le dispositif est avéré authentique, l'utilisateur peut exécuter la phase opérationnelle,
- si à l'issue de la phase préalable d'authentification du dispositif, le dispositif n'est pas avéré authentique, l'utilisateur en est alerté par un moyen quelconque de manière à pouvoir empêcher l'exécution de la phase opérationnelle,
en sorte que, d'abord le dispositif, puis l'utilisateur, sont authentifiés et que l'opération exécutée et le service procuré sont sécurisés.

Selon une réalisation, la phase préalable d'authentification du dispositif est exécutée par l'utilisateur.

Selon une réalisation, le procédé, qui comporte dans le temps plusieurs phases opérationnelles, est tel qu'une phase préalable d'authentification du dispositif est exécutée avant chaque phase opérationnelle.

Selon une réalisation, la phase préalable d'authentification du dispositif par l'utilisateur, repose sur un processus d'authentification question-réponse, moyennant un secret d'authentification du dispositif qui est une question préalable de l'utilisateur au dispositif et une réponse préalable du dispositif à l'utilisateur à la question préalable, la question préalable et la réponse préalable étant secrètes pour n'être connues ou accessibles que du seul utilisateur authentique, de sorte que l'authenticité du dispositif n'est avérée que si et seulement si l'utilisateur vérifie qu'il y a identité entre, d'une part, la réponse apportée par le dispositif à la question préalable et, d'autre part, la réponse préalable.

Selon une variante de réalisation, si à l'issue de la phase préalable d'authentification du dispositif, le dispositif n'est pas avéré authentique, l'utilisateur peut être empêché par le dispositif lui-même d'exécuter la phase opérationnelle.

Selon une réalisation, le procédé comprend également une phase préliminaire de configuration, dans laquelle le dispositif est configuré avec le secret d'authentification du dispositif (SDAS).

Selon une réalisation, la phase préliminaire de configuration du dispositif est exécutée par l'utilisateur.

Selon une réalisation, la configuration du dispositif avec la question préalable et la réponse préalable est exécutée à partir d'une question de l'utilisateur, grâce à un processus générateur de question à réponse.

Selon une réalisation, la phase préalable d'authentification du dispositif est exécutée après que la phase préliminaire de configuration a été exécutée, et sous la condition de l'absence d'exécution, entre temps, de toute autre phase préalable d'authentification du dispositif ou d'une phase opérationnelle.

Selon les réalisations, la phase préalable d'authentification du dispositif est exécutée après que la phase préliminaire de configuration a été exécutée, et sous la condition de l'exécution entre temps, d'une ou de plusieurs autres phases préalables d'authentification du dispositif ou de phases opérationnelles.

Selon les réalisations, à une phase préliminaire de configuration est associée de façon nécessaire et suffisante soit une seule phase préalable d'authentification du dispositif soit une pluralité préfixée de phases préalables d'authentification du dispositif successives soit une pluralité illimitée de phases préalables d'authentification du dispositif successives.

Selon une réalisation, l'étape préliminaire d'authentification de l'utilisateur par le dispositif repose sur un secret d'authentification de l'utilisateur qui est une réponse opérationnelle de l'utilisateur au dispositif, secrète pour n'être connue et accessible que du seul utilisateur authentique, de sorte que l'authenticité de l'utilisateur n'est avérée que si et seulement si le dispositif vérifie qu'il y a identité entre, d'une part, la réponse apportée par l'utilisateur et, d'autre part, la réponse opérationnelle.

Selon une réalisation, la question préalable et la réponse opérationnelle sont différentes.

Selon une réalisation, le procédé comprend une étape de suppression des données sensibles ou confidentielles du dispositif, exécutée automatiquement à l'issue d'un nombre préfixé d'exécution de phases préalables d'authentification du dispositif successives où le dispositif n'est pas avéré authentique. En particulier, cette étape de suppression des données sensibles ou confidentielles efface également la question préalable et la réponse préalable lorsque, à l'issue d'un nombre préfixé d'exécution de phases préalables d'authentification du dispositif ou du système successives, l'utilisateur a échoué à fournir la question préalable correspondant à la réponse préalable, de telle sorte le dispositif ou le système considérera que l'utilisateur n'est pas l'utilisateur authentique.

Selon un deuxième aspect, l'invention a pour objet un procédé d'exploitation par un utilisateur d'un dispositif électronique fonctionnel commandable par l'utilisateur afin qu'il lui procure un service déterminé, le dispositif contenant des données sensibles ou confidentielles, dans lequel, dans une phase opérationnelle déclenchée par l'utilisateur et incluant une étape préliminaire d'authentification de l'utilisateur par le dispositif, le dispositif exécute une opération spécifique appropriée pour procurer le service, le procédé d'exploitation comportant, en outre, avant toute phase opérationnelle, une phase préalable d'authentification du dispositif dans laquelle est vérifiée l'authenticité du dispositif, de sorte que :
- si à l'issue de la phase préalable d'authentification du dispositif, le dispositif est avéré authentique, l'utilisateur peut exécuter la phase opérationnelle,
- si à l'issue de la phase préalable d'authentification du dispositif, le dispositif n'est pas avéré authentique, l'utilisateur en est alerté par un moyen quelconque de manière à pouvoir empêcher l'exécution de la phase opérationnelle,
en sorte que, d'abord le dispositif, puis l'utilisateur, sont authentifiés et que l'opération exécutée et le service procuré sont sécurisés.

Selon un troisième aspect, l'invention a pour objet un dispositif électronique fonctionnel, commandable par un utilisateur en vue d'un service déterminé, contenant des données sensibles ou confidentielles, spécialement agencé pour la mise en œuvre du procédé d'authentification mutuelle et pour la mise en œuvre du procédé d'exploitation précédemment décrits, notamment pour exécuter une phase préalable d'authentification du dispositif.

Selon une réalisation, le dispositif est configuré à l'issue d'une phase préliminaire de configuration avec le secret d'authentification du dispositif, qui est une question préalable de l'utilisateur au dispositif et une réponse préalable du dispositif à l'utilisateur à la question préalable.

Ainsi, le dispositif comprend et combine, d'une part, le secret d'authentification du dispositif et, d'autre part, le secret d'authentification de l'utilisateur.

Selon un quatrième aspect, l'invention a pour objet un procédé d'authentification mutuelle d'un système électronique fonctionnel, commandable par un utilisateur en vue d'un service déterminé, contenant des données sensibles ou confidentielles, comprenant une pluralité de dispositifs électroniques associés fonctionnellement entre eux, agencé de manière à - dans une phase opérationnelle déclenchée par l'utilisateur et incluant une étape où le système authentifie l'utilisateur -, exécuter une opération ou une série d'opérations spécifique appropriée pour procurer le service, le procédé comportant, en outre, avant toute phase opérationnelle, une phase préalable d'authentification du système, dans laquelle est vérifiée l'authenticité de tout ou partie de la pluralité des dispositifs que le système comprend, moyennant la mise en œuvre, pour chaque dispositif vérifié, du procédé d'authentification précédemment décrit.

Selon une réalisation avec une pluralité de dispositifs électroniques formant une ou plusieurs chaînes fonctionnelles avec un ou des dispositifs amont et un ou des dispositifs aval, le procédé est tel que :
- si à l'issue de la phase préalable d'authentification d'un dispositif amont d'une chaîne de dispositifs, ce dispositif est avéré authentique, il est procédé à l'authentification du ou des dispositifs aval de la même chaîne de dispositifs,
- si à l'issue de la phase préalable d'authentification d'un dispositif amont d'une chaîne de dispositifs, ce dispositif n'est pas avéré authentique, il n'est pas procédé à l'authentification du ou des dispositifs aval de la même chaîne de dispositifs, le système étant avéré non authentique.

Selon un cinquième aspect, l'invention a pour objet un procédé d'exploitation par un utilisateur d'un système électronique fonctionnel commandable par l'utilisateur afin qu'il lui procure un service déterminé, le système contenant des données sensibles ou confidentielles, comprenant une pluralité de dispositifs électroniques associés fonctionnellement entre eux, dans lequel - dans une phase opérationnelle déclenchée par l'utilisateur et incluant une étape préliminaire d'authentification de l'utilisateur par le système -, le système exécute une opération ou une série d'opérations spécifique appropriée pour procurer le service, le procédé d'exploitation comportant, en outre, avant toute phase opérationnelle, une phase préalable d'authentification du système dans laquelle est vérifiée l'authenticité de tout ou partie de la pluralité des dispositifs que le système comprend, moyennant la mise en œuvre, pour chaque dispositif vérifié, du procédé d'authentification précédemment décrit, de sorte que :
- si à l'issue de la phase préalable d'authentification du système, le système est avéré authentique, l'utilisateur peut exécuter la phase opérationnelle,
- si à l'issue de la phase préalable d'authentification du système, le système n'est pas avéré authentique, l'utilisateur en est alerté par un moyen quelconque de manière à pouvoir empêcher l'exécution de la phase opérationnelle,
en sorte que d'abord le système puis l'utilisateur sont authentifiés et que l'opération exécutée et le service procuré sont sécurisés.

Selon un sixième aspect, l'invention a pour objet un système électronique fonctionnel, commandable par un utilisateur en vue d'un service déterminé, contenant des données sensibles ou confidentielles, comprenant une pluralité de dispositifs électroniques associés fonctionnellement entre eux, tels qu'il a été précédemment décrit, spécialement agencé pour la mise en œuvre du procédé d'authentification mutuelle tels qu'il a été précédemment décrit, et pour la mise en œuvre du procédé d'exploitation tels qu'il a été précédemment décrit, notamment pour exécuter une phase préalable d'authentification de tout ou partie de la pluralité des dispositifs que le système comprend.

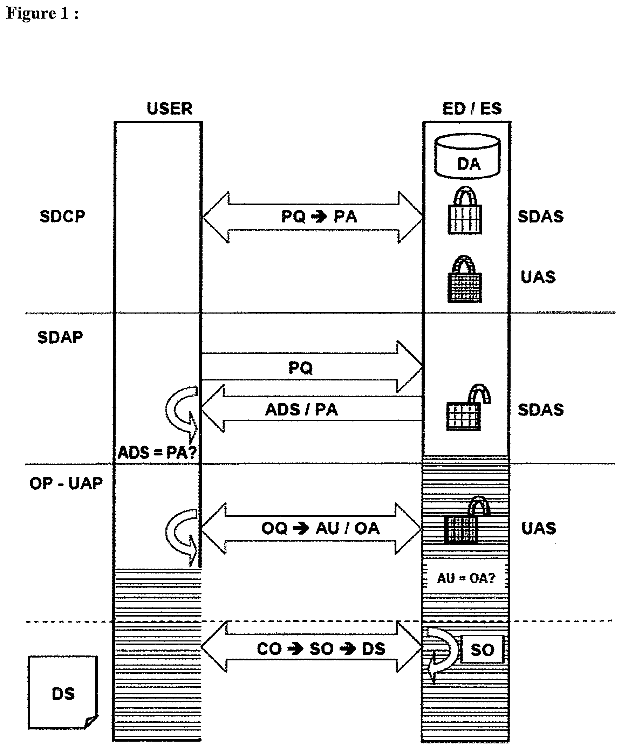

On décrit maintenant brièvement la figure unique 1. Cette figure est un schéma général théorique indicatif et purement didactique des étapes d'une réalisation possible d'un procédé d'exploitation par un utilisateur d'un dispositif électronique fonctionnel commandable par l'utilisateur afin qu'il lui procure un service déterminé, le dispositif contenant des données sensibles ou confidentielles, illustrant :
- d'abord, une phase préliminaire de configuration reposant sur un secret d'authentification du dispositif, exécutée par l'utilisateur,
- puis, une phase préalable d'authentification du dispositif, dans laquelle est vérifiée l'authenticité du dispositif, reposant sur le secret d'authentification du dispositif,
- puis, dans la mesure où à l'issue de la phase préalable d'authentification du dispositif, le dispositif est avéré authentique, une phase opérationnelle déclenchée par l'utilisateur et incluant une étape préliminaire d'authentification de l'utilisateur par le dispositif reposant sur un secret d'authentification de l'utilisateur, phase opérationnelle dans laquelle le dispositif exécute une opération spécifique appropriée pour procurer le service.

Ci-après un exposé détaillé de modes d'exécution de l'invention et de différentes réalisations, assorti d'exemples et de référence à la figure. Cet exposé doit être compris dans le contexte de l'invention et avec l'interprétation des termes, comme il a été présenté précédemment, et qu'il est donc inutile de répéter.

L'invention concerne et met en œuvre un dispositif électronique (également informatique et communicant) fonctionnel ED commandable, qui contient des données sensibles ou confidentielles DA, et, plus généralement, un système électronique (également informatique et communicant) fonctionnel ES qui comprend une pluralité de dispositifs ED formant une ou plusieurs chaînes fonctionnelles avec un ou des dispositifs amont et un ou des dispositifs aval. Comme pour le dispositif ED, le système ES contient des données sensibles ou confidentielles DA. L'exposé de l'invention est plus spécialement détaillé pour un dispositif ED. Elle peut être transposée pour un système ES à savoir pour tout ou partie des dispositifs ED qu'il comporte, tout spécialement ceux contenant des données sensibles ou confidentielles DA ou dont l'authenticité doit être avérée.

L'invention implique un utilisateur USER qui commande le dispositif ED ou le système ES, moyennant une commande CO, afin qu'il lui procure un service déterminé DS et exécute les différentes phases ou étapes requises pour l'exploitation du dispositif ED ou du système ES.

L'invention vise, s'agissant tant du dispositif ED ou du système ES que de l'utilisateur USER, d'assurer une authentification mutuelle, c'est-à-dire que l'utilisateur USER puisse d'abord vérifier que le dispositif ED ou le système ES est bien le bon et ensuite que le dispositif ED ou le système ES puisse vérifier que l'utilisateur USER est bien le bon. C'est ainsi que l'opération spécifique SO exécutée par le dispositif ED ou par le système ES et finalement le service déterminé DS procuré à l'utilisateur USER sont garantis sécurisés, y compris pour l'utilisateur USER. Il faut comprendre par-là, que la commande du dispositif ED ou du système ES par l'utilisateur USER n'est possible que si le dispositif ED ou le système ES est authentique, et non pas un dispositif ou un système factice ou illicite, et si l'utilisateur USER est authentique, et non pas un utilisateur postiche ou illicite. S'il apparaît que le dispositif ED ou le système ES n'est pas authentique, l'utilisateur ne pourra exécuter l'opération spécifique SO en ce sens qu'il en sera empêché. Et de même, s'il apparaît que l'utilisateur n'est pas authentique, il ne pourra pas d'avantage exécuter l'opération spécifique SO en ce sens qu'il en sera empêché.

Par la suite, il est supposé que le dispositif ED ou le système ES est authentique, et que l'utilisateur USER est authentique. L'exposé de l'invention détaille ce qu'il advient lorsque le dispositif ED ou le système ES n'est pas authentique, et lorsque l'utilisateur USER n'est pas authentique.

Dans une réalisation, l'utilisateur USER est la personne même qui est authentique.

Dans une autre réalisation, l'utilisateur USER est un avatar de la personne qui est authentique. Cet avatar est licite pour l'exécution considérée et dispose licitement des codes, secrets, etc. que possède la personne qui est authentique, de sorte à pouvoir agir licitement en lieu et place de la personne qui est authentique.

On désigne par « phase opérationnelle », OP, une phase déclenchée par l'utilisateur USER par la commande CO, dans laquelle le dispositif ED ou le système ES exécute une opération spécifique appropriée SO spécialement conçue pour procurer à l'utilisateur USER le service DS.

On désigne par « étape préliminaire d'authentification de l'utilisateur », UAP, une étape préliminaire incluse dans la phase opérationnelle OP, dans laquelle le dispositif authentifie l'utilisateur USER, au moyen d'un secret d'authentification de l'utilisateur UAS.

On désigne par « phase préalable d'authentification du dispositif ou du système », SDAP, une phase dans laquelle est vérifiée par l'utilisateur USER, l'authenticité du dispositif ED ou du système ES, par exemple au moyen d'un secret d'authentification du dispositif ou du système SDAS.

On désigne par « phase préliminaire de configuration du dispositif ou du système », SDCP, une phase dans laquelle le dispositif ED ou le système ES est configuré avec le secret d'authentification du dispositif ou du système SDAS. Dans une réalisation, cette configuration est réalisée par l'utilisateur USER.

Le procédé d'exploitation du dispositif ED ou du système ES est tel qu'il comporte, avant toute phase opérationnelle OP, une phase préalable d'authentification du dispositif ou du système SDAP, qui est une phase qui s'ajoute à la phase opérationnelle OP, qui est exécutée avant elle, et qui conditionne la possibilité même de l'exécution de cette phase opérationnelle OP. En effet, si à l'issue de la phase préalable d'authentification du dispositif ou du système SDAP, le dispositif ED ou le système ES est avéré authentique, l'utilisateur USER peut exécuter la phase opérationnelle OP, alors que, si à l'issue de la phase préalable d'authentification du dispositif ou du système SDAP, le dispositif ED ou le système ES n'est pas avéré authentique, l'utilisateur USER peut empêcher l'exécution de la phase opérationnelle OP.

Ainsi, le procédé d'exploitation du dispositif ED ou du système ES intègre un procédé d'authentification mutuelle du dispositif ED ou du système ES et de son utilisateur USER. C'est ainsi que, d'abord le dispositif ED ou le système ED, puis l'utilisateur USER sont authentifiés. Et c'est ainsi que l'opération spécifique SO exécutée par le dispositif ED ou le système ED et que le service DS procuré à l'utilisateur USER sont sécurisés. L'invention peut aussi bien être vue sous l'angle d'un procédé d'exploitation d'un dispositif ED ou d'un système ES qui intègre ce procédé d'authentification mutuelle, que sous l'angle de ce procédé d'authentification mutuelle, destiné à s'intégrer, et s'intégrant, dans un tel procédé d'exploitation.

Selon une réalisation, dans laquelle il est prévu plusieurs phases opérationnelles dans le temps, une phase préalable d'authentification du dispositif ou du système SDAP est exécutée avant chaque phase opérationnelle OP.

Dans une réalisation possible, la phase préalable d'authentification du dispositif ou du système SDAP par l'utilisateur USER, repose sur un processus d'authentification question-réponse, moyennant le secret d'authentification du dispositif ou du système SDAS, lequel est une question préalable PQ de l'utilisateur USER au dispositif ED ou au système ES et une réponse préalable PA du dispositif ED ou du système ES à l'utilisateur USER à la question préalable PQ. La question préalable PQ et la réponse préalable PA sont différentes et secrètes pour n'être connues ou accessibles que du seul utilisateur authentique USER. De la sorte, l'authenticité du dispositif ED ou du système ES n'est avérée que si et seulement si l'utilisateur USER vérifie qu'il y a identité entre la réponse ADS apportée par le dispositif ED ou le système ES à la question préalable PQ et la réponse préalable PA.

Il est entendu que l'authentification du dispositif ou du système SDAP par le processus d'authentification question-réponse qui vient d'être mentionné n'est pas exclusif et limitatif. D'autres processus procurant une authentification d'un niveau élevé peuvent être envisagées. L'invention inclut donc également les réalisations reposant sur un processus d'authentification équivalent du processus question-réponse. Il est entendu également que la phase préalable d'authentification du dispositif ou du système SDAP peut comporter une combinaison de plusieurs processus d'authentification, question-réponse ou équivalent, et ce dans le but d'avoir un niveau plus élevé d'authentification. C'est ainsi qu'il faut comprendre l'expression la phase préalable d'authentification du dispositif ou du système SDAP repose sur un processus d'authentification question-réponse.

Selon une réalisation possible, la configuration du dispositif ED ou du système ES avec le secret d'authentification du dispositif ou du système SDAS (question préalable PQ et réponse préalable PA) est exécutée à partir d'une question de l'utilisateur USER, grâce à un processus générateur de question à réponse, comme une fonction, un programme ou un algorithme.

Plusieurs réalisations peuvent être envisagées en ce qui concerne l'articulation entre les phases préliminaire de configuration du dispositif ou du système SDCP, préalable d'authentification du dispositif ou du système SDAP et opérationnelle OP. Ainsi, selon une réalisation, la phase préalable d'authentification du dispositif ou du système SDAP est exécutée après que la phase préliminaire de configuration du dispositif ou du système SDCP a été exécutée, moyennant l'absence d'exécution, entre temps, de toute autre phase préalable d'authentification du dispositif ou du système SDAP ou d'une phase opérationnelle OP. Et, selon d'autres réalisations, la phase préalable d'authentification du dispositif ou du système SDAP est exécutée après que la phase préliminaire de configuration du dispositif ou du système SDCP a été exécutée, moyennant l'exécution entre temps, d'une ou de plusieurs autres phases préalables d'authentification du dispositif ou du système SDAP ou de phases opérationnelles OP. D'autre part, selon les réalisations, à une phase préliminaire de configuration du dispositif ou du système SDCP est associée de façon nécessaire et suffisante soit une seule phase préalable d'authentification du dispositif ou du système SDAP soit une pluralité préfixée de phases préalables SDAP successives soit une pluralité illimitée de phases préalables SDAP successives.

Le secret d'authentification de l'utilisateur UAS mis en œuvre dans l'étape d'authentification de l'utilisateur UAP est une réponse opérationnelle OA de l'utilisateur USER au dispositif ED ou au système ES qui est secrète pour n'être connue et accessible que du seul utilisateur authentique, de sorte que l'authenticité de l'utilisateur n'est avérée que si et seulement si le dispositif ED ou le système ES vérifie qu'il y a identité entre d'une part la réponse apportée AU par l'utilisateur et d'autre part la réponse opérationnelle OA.

La phase opérationnelle OP inclut de façon préliminaire l'étape d'authentification de l'utilisateur UAP, cette dernière conditionnant la possibilité même de l'exécution de cette phase opérationnelle OP. En effet, si à l'issue de l'étape préliminaire d'authentification de l'utilisateur UAP, l'utilisateur USER est avéré authentique, cet utilisateur USER peut exécuter la phase opérationnelle OP, alors que, si à l'issue de l'étape préliminaire d'authentification de l'utilisateur UAP, l'utilisateur n'est pas avéré authentique, cet utilisateur peut empêcher l'exécution de la phase opérationnelle OP.

Plusieurs réalisations peuvent être envisagées. Dans une réalisation, il est prévu une question opérationnelle OQ du dispositif ED ou du système ES à l'utilisateur USER, à laquelle celui-ci doit répondre par la réponse opérationnelle OA. Ou bien, c'est le lancement même de la phase opérationnelle OP qui oblige l'utilisateur USER à apporter au dispositif ED ou au système ES la réponse opérationnelle OA. Dans tous les cas, si la réponse apportée AU par l'utilisateur et la réponse opérationnelle OA ne sont pas identiques, le dispositif ED ou le système ES considérera que l'utilisateur n'est pas l'utilisateur authentique, ce qui aura pour effet que l'opération SO ne sera pas exécutée et que le service DS ne sera pas procuré.

A l'instar de l'authentification du dispositif ou du système, l'authentification de l'utilisateur par le processus d'authentification question-réponse qui vient d'être mentionné n'est pas exclusif et limitatif. D'autres processus procurant une authentification d'un niveau élevé peuvent être envisagées. L'invention inclut donc également les réalisations reposant sur un processus d'authentification équivalent du processus question-réponse. Il est entendu également que l'étape préliminaire d'authentification de l'utilisateur UAP peut comporter une combinaison de plusieurs processus d'authentification, question-réponse ou équivalent, et ce dans le but d'avoir un niveau plus élevé d'authentification.

Selon une réalisation, la question préalable PQ et la réponse opérationnelle OA sont différentes.

Selon une réalisation, le procédé comprend une étape de suppression des données sensibles ou confidentielles DA du dispositif ED ou du système ES. Cette étape de suppression est exécutée automatiquement à l'issue d'un nombre préfixé d'exécution de phases préalables d'authentification du dispositif ou du système SDAP successives où le dispositif ED ou le système ES n'est pas avéré authentique.

Selon une réalisation complémentaire, l'étape de suppression des données sensibles ou confidentielles DA du dispositif ED ou du système ES supprime également la question préalable PQ et la réponse préalable PA lorsque à l'issue d'un nombre préfixé d'exécution de phases préalables d'authentification du dispositif ou du système SDAP successives, l'utilisateur USER a échoué à fournir la question préalable PQ correspondant à la réponse préalable PA, de telle sorte le dispositif ED ou le système ES considérera que l'utilisateur n'est pas l'utilisateur authentique.

Dans le cas où le procédé concerne un système ES, il est prévu, avant toute phase opérationnelle OP, une phase préalable d'authentification du système SDAP, dans laquelle est vérifiée l'authenticité de tout ou partie de la pluralité des dispositifs ED que le système ES comprend, moyennant la mise en œuvre, pour chaque dispositif ED vérifié, du procédé d'authentification précédemment décrit.

Dans un tel système ES, il se peut que la pluralité de dispositifs ED forment une ou plusieurs chaînes fonctionnelles avec un ou des dispositifs ED amont et un ou des dispositifs ED aval. Dans ce cas, il peut être prévu, d'une part, que si à l'issue de la phase préalable d'authentification SDAP d'un dispositif ED amont d'une chaîne de dispositifs ED, ce dispositif ED est avéré authentique, il est procédé à l'authentification SDAP du ou des dispositifs ED aval de la même chaîne de dispositifs ED, d'autre part, que si à l'issue de la phase préalable d'authentification SDAP d'un dispositif ED amont d'une chaîne de dispositifs ED, ce dispositif ED n'est pas avéré authentique, il n'est pas procédé à l'authentification SDAP du ou des dispositifs ED aval de la même chaîne de dispositifs ED, le système ES étant avéré non authentique.

Un dispositif ED ou un système ES conforme à l'invention est spécialement agencé pour la mise en œuvre du procédé d'authentification mutuelle et pour la mise en œuvre du procédé d'exploitation précédemment décrits, notamment pour exécuter une phase préalable d'authentification du dispositif ou du système SDAP. Ce dispositif ED ou ce système ES est configuré avec - et donc comprend et combine - le secret d'authentification du dispositif ou du système SDAS, d'une part, et le secret d'authentification de l'utilisateur UAS, d'autre part.

On se réfère maintenant au schéma de la figure unique 1. Il représente l'utilisateur USER et le dispositif ED ou le système ES sous la forme de deux colonnes, respectivement à gauche et à droite. Il présente trois blocs se succédant du haut vers le bas sur l'axe du temps, à savoir la phase préliminaire de configuration SDCP, la phase préalable d'authentification du dispositif ou du système SDAS et enfin la phase opérationnelle OP qui est elle-même décomposée en deux blocs, le premier correspondant à l'étape préliminaire d'authentification de l'utilisateur UAP et le second à la phase opérationnelle proprement dite. Comme il a été exposé précédemment, ces deux blocs peuvent être plus ou moins imbriqués.

Le schéma illustre que le dispositif ED ou le système ES contient des données sensibles ou confidentielles DA et comprend et combine, d'une part, le secret d'authentification du dispositif ou du système SDAS et, d'autre part, le secret d'authentification de l'utilisateur UAS (représentés symboliquement par des cadenas fermés).

Le schéma illustre que ces deux secrets sont ouverts successivement, d'abord le secret d'authentification du dispositif ou du système SDAS et, d'autre part, le secret d'authentification de l'utilisateur UAS (représentés symboliquement par des cadenas ouverts).

Le dispositif ED ou le système ES une fois authentifié est représenté avec des rayures horizontales et, de même, l'utilisateur une fois authentifié est représenté avec des rayures horizontales.

Le schéma illustre que la commande CO de l'utilisateur en vue de l'exécution par le dispositif ED ou le système ES de l'opération spécifique SO destinée à procurer à l'utilisateur le service déterminé DS, n'intervient qu'une fois que, en combinaison, le dispositif ED ou le système ES est authentifié (par l'utilisateur) et l'utilisateur authentifié.

## Revendications

1. Procédé d'authentification mutuelle d'un dispositif (DE) électronique fonctionnel commandable et de son utilisateur (USER), le procédé comprenant :
- une phase préliminaire de configuration (SDCP) du dispositif (DE) définissant les modalités de la vérification de son authenticité,
- une phase préalable d'authentification du dispositif (SDAP) par l'utilisateur (USER),
- une phase opérationnelle (OP) déclenchée par l'utilisateur (USER) et incluant une étape préliminaire d'authentification de l'utilisateur (UAP) par le dispositif (DE), l'étape préliminaire d'authentification de l'utilisateur (UAP) par le dispositif (DE) comprenant la fourniture d'une question opérationnelle à l'utilisateur, la réception d'une réponse de l'utilisateur, et la vérification qu'il y a identité entre la réponse apportée par l'utilisateur et une réponse opérationnelle attendue, l'utilisateur (USER) pouvant ensuite commander le dispositif (DE) afin qu'il lui procure un service déterminé (DS),
le dispositif (DE) contenant des données sensibles ou confidentielles (DA) et étant agencé de manière à, dans la phase opérationnelle (OP) déclenchée par l'utilisateur (USER), exécuter une opération spécifique (SO) appropriée pour procurer le service (DS),
le procédé comportant, avant toute phase opérationnelle (OP), la phase préalable d'authentification du dispositif (SDAP),
la phase préalable d'authentification du dispositif (SDAP) par l'utilisateur (USER), reposant sur un processus d'authentification question-réponse, moyennant un secret d'authentification du dispositif (SDAS) qui est une question préalable (PQ) de l'utilisateur (USER) au dispositif (DE) et une réponse préalable (PA) du dispositif (DE) à l'utilisateur (USER) à la question préalable (PQ), la question préalable (PQ) et la réponse préalable (PR) étant secrètes pour n'être connues ou accessibles que du seul utilisateur (USER) authentique, de sorte que l'authenticité du dispositif (DE) n'est avérée que si et seulement si l'utilisateur (USER) vérifie qu'il y a identité entre, d'une part, la réponse apportée (ADS) par le dispositif (DE) à la question préalable (PQ) et d'autre part la réponse préalable (PA), de sorte que :
si à l'issue de la phase préalable d'authentification du dispositif (SDAP), le dispositif (DE) est avéré authentique, l'utilisateur (USER) peut exécuter la phase opérationnelle (OP),
si à l'issue de la phase préalable d'authentification du dispositif (SDAP), le dispositif (ED) n'est pas avéré authentique, l'utilisateur (USER) peut empêcher l'exécution de la phase opérationnelle (OP), en sorte que, d'abord le dispositif (DE), puis l'utilisateur (USER), sont authentifiés et que l'opération exécutée et le service (DS) procuré sont sécurisés,
procédé comprenant en outre la suppression, par le dispositif électronique, des données confidentielles, si l'utilisateur n'a pas fourni la question préalable pendant un nombre prédéterminé d'exécutions de la phase préalable d'authentification du dispositif par l'utilisateur, le dispositif électronique considérant alors que l'utilisateur n'est pas l'utilisateur authentique.

2. Procédé selon la revendication 1, dans lequel la phase préliminaire de configuration (SDCP) configure le dispositif (ED) avec le secret d'authentification du dispositif (SDAS).

3. Procédé selon la revendication 2, dans lequel la phase préliminaire de configuration (SDCP) du dispositif (DE) est exécutée par l'utilisateur (USER).

4. Procédé selon la revendication 3, dans lequel la configuration du dispositif (DE) avec la question préalable (PQ) et la réponse préalable (PA) est exécutée à partir d'une question de l'utilisateur (USER), grâce à un processus générateur de question à réponse.

5. Procédé selon l'une des revendications 2 à 4, dans lequel la phase préalable d'authentification du dispositif (SDAP) est exécutée après que la phase préliminaire de configuration (SDCP) a été exécutée, et sous la condition de l'absence d'exécution, entre temps, de toute autre phase préalable d'authentification du dispositif (SDAP) ou d'une phase opérationnelle (OP).

6. Procédé selon l'une des revendications 2 à 4, dans lequel la phase préalable d'authentification du dispositif (SDAP) est exécutée après que la phase préliminaire de configuration (SDCP) a été exécutée, et sous la condition de l'exécution entre temps, d'une ou de plusieurs autres phases préalables d'authentification du dispositif (SADP) ou de phases opérationnelles (OP).

7. Procédé selon l'une des revendications 2 à 4, dans lequel à une phase préliminaire de configuration (SDCP) est associée de façon nécessaire et suffisante soit une seule phase préalable d'authentification du dispositif (SDAP) soit une pluralité préfixée de phases préalables d'authentification du dispositif (SDAP) successives soit une pluralité illimitée de phases préalables d'authentification du dispositif (SDAP) successives.

8. Procédé selon l'une des revendications 1 à 7, dans lequel l'étape préliminaire d'authentification de l'utilisateur (UAP) par le dispositif (DE) repose sur un secret d'authentification de l'utilisateur (UAS) qui est une réponse opérationnelle de l'utilisateur (OA) au dispositif (DE), secrète pour n'être connue et accessible que du seul utilisateur (USER) authentique, de sorte que l'authenticité de l'utilisateur (USER) n'est avérée que si et seulement si le dispositif (DE) vérifie qu'il y a identité entre, d'une part, la réponse apportée par l'utilisateur (AU) et, d'autre part, la réponse opérationnelle (OA).

9. Dispositif (DE) électronique fonctionnel, commandable par un utilisateur (USER) en vue d'un service déterminé (DS), contenant des données sensibles ou confidentielles (DA), **caractérisé en ce qu'**il est configuré pour la mise en oeuvre du procédé selon l'une quelconque des revendications 1 à 8.

10. Procédé selon l'une des revendications 1 à 8, mis en oeuvre avec une pluralité de dispositifs (DE) électroniques selon la revendication 9 formant une ou plusieurs chaînes fonctionnelles avec un ou des dispositifs (DE) amont et un ou des dispositifs (DE) aval, dans lequel :
- si à l'issue de la phase préalable d'authentification d'un dispositif (DE) amont d'une chaîne de dispositifs (DE), ce dispositif (DE) est avéré authentique, il est procédé à l'authentification du ou des dispositifs (DE) aval de la même chaîne de dispositifs (DE),
- si à l'issue de la phase préalable d'authentification d'un dispositif (DE) amont d'une chaîne de dispositifs (DE), ce dispositif (DE) n'est pas avéré authentique, il n'est pas procédé à l'authentification du ou des dispositifs (DE) aval de la même chaîne de dispositifs (DE), le système (ES) étant avéré non authentique.

## Patentansprüche

1. Verfahren zur gegenseitigen Authentifizierung einer steuerbaren funktionalen elektronischen Vorrichtung (DE) und ihres Benutzers (USER), wobei das Verfahren umfasst:
- eine vorläufige Konfigurationsphase (SDCP) der Vorrichtung (DE), in der die Modalitäten zur Verifizierung ihrer Authentizität definiert werden,
- eine vorhergehende Vorrichtungsauthentifizierungsphase (SDAP) durch den Benutzer (USER),
- eine vom Benutzer (USER) ausgelöste operative Phase (OP), die einen vorläufigen Benutzerauthentifizierungsschritt (UAP) durch die Vorrichtung (DE) umfasst, wobei der vorläufige Benutzerauthentifizierungsschritt (UAP) durch die Vorrichtung (DE) die Bereitstellung einer operativen Frage an den Benutzer, den Empfang einer Antwort von dem Benutzer und die Verifizierung, dass die vom Benutzer gegebene Antwort mit einer erwarteten operativen Antwort übereinstimmt, umfasst, wobei der Benutzer (USER) die Vorrichtung (DE) dann anweisen kann, ihm einen bestimmten Dienst (DS) bereitzustellen,
wobei die Vorrichtung (DE) sensible oder vertrauliche Daten (DA) enthält und so eingerichtet ist, dass sie in der vom Benutzer (USER) ausgelösten operativen Phase (OP) eine bestimmte Operation (SO) durchführt, die zur Bereitstellung der Dienstleistung (DS) geeignet ist,
wobei das Verfahren vor jeder operativen Phase (OP) die vorhergehende Vorrichtungsauthentifizierungsphase (SDAP) umfasst,
wobei die vorhergehende Vorrichtungsauthentifizierungsphase (SDAP) durch den Benutzer (USER) auf einem Frage-Antwort-Authentifizierungsprozess unter Verwendung eines Vorrichtungsauthentifizierungsgeheimnisses (SDAS) beruht, bei dem es sich um eine vorhergehende Frage (PO) des Benutzers (USER) an die Vorrichtung (DE) und eine vorhergehende Antwort (PA) der Vorrichtung (DE) an den Benutzer (USER) auf die vorhergehende Frage (PQ) handelt, wobei die vorhergehende Frage (PQ) und die vorhergehende Antwort (PR) geheim und allein dem authentischen Benutzer (USER) bekannt oder zugänglich sind, so dass die Authentizität der Vorrichtung (DE) nur dann als erwiesen gilt, wenn der Benutzer (USER) verifiziert, dass die von der Vorrichtung (DE) gegebene Antwort (ADS) einerseits mit der vorhergehenden Frage (PQ) und andererseits mit der vorhergehenden Antwort (PA) übereinstimmt, so dass:
wenn sich am Ende der vorhergehenden Vorrichtungsauthentifizierungsphase (SDAP) die Vorrichtung (DE) als authentisch erweist, der Benutzer (USER) die operative Phase (OP) ausführen kann,
wenn sich am Ende der vorhergehenden Vorrichtungsauthentifizierungsphase (SDAP) die Vorrichtung (ED) als nicht authentisch erweist, der Benutzer (USER) die Ausführung der operativen Phase (OP) verhindern kann, so dass erst die Vorrichtung (DE) und dann der Benutzer (USER) authentifiziert werden und die ausgeführte Operation sowie der bereitgestellte Dienst (DS) gesichert sind,
wobei das Verfahren ferner die Löschung der vertraulichen Daten durch die elektronische Vorrichtung umfasst, wenn der Benutzer die vorhergehende Frage während einer vorbestimmten Anzahl von Ausführungen der vorhergehenden Vorrichtungsauthentifizierungsphase durch den Benutzer nicht bereitgestellt hat, wobei die elektronische Vorrichtung dann davon ausgeht, dass der Benutzer nicht der authentische Benutzer ist.

2. Verfahren nach Anspruch 1, wobei die vorläufige Konfigurationsphase (SDCP) die Vorrichtung (ED) mit dem Vorrichtungsauthentifizierungsgeheimnis (SDAS) konfiguriert.

3. Verfahren nach Anspruch 2, wobei die vorläufige Konfigurationsphase (SDCP) der Vorrichtung (DE) vom Benutzer (USER) durchgeführt wird.

4. Verfahren nach Anspruch 3, wobei die Konfiguration der Vorrichtung (DE) mit der vorhergehenden Frage (PQ) und der vorhergehenden Antwort (PA) ausgehend von einer Frage des Benutzers (USER) dank eines Frage-Antwort-Generierungsprozesses ausgeführt wird.

5. Verfahren nach einem der Ansprüche 2 bis 4, wobei die vorhergehende Vorrichtungsauthentifizierungsphase (SDAP) nach Ausführung der vorläufigen Konfigurationsphase (SDCP) ausgeführt wird und unter der Bedingung, dass in der Zwischenzeit keine andere vorhergehende Vorrichtungsauthentifizierungsphase (SDAP) oder operative Phase (OP) ausgeführt wird.

6. Verfahren nach einem der Ansprüche 2 bis 4, wobei die vorhergehende Vorrichtungsauthentifizierungsphase (SDAP) nach Ausführung der vorläufigen Konfigurationsphase (SDCP) ausgeführt wird und unter der Bedingung, dass in der Zwischenzeit eine oder mehrere andere vorhergehende Vorrichtungsauthentifizierungsphasen (SADP) oder operative Phasen (OP) ausgeführt werden.

7. Verfahren nach einem der Ansprüche 2 bis 4, wobei eine vorläufige Konfigurationsphase (SDCP) notwendigerweise und hinreichend entweder mit einer einzelnen vorhergehenden Vorrichtungsauthentifizierungsphase (SDAP) oder mit einer vorab festgelegten Vielzahl aufeinanderfolgender vorhergehender Vorrichtungsauthentifizierungsphasen (SDAP) oder mit einer unbegrenzten Anzahl aufeinanderfolgender vorhergehender Vorrichtungsauthentifizierungsphasen (SDAP) verknüpft ist.

8. Verfahren nach einem der Ansprüche 1 bis 7, wobei der vorläufige Benutzerauthentifizierungsschritt (UAP) durch die Vorrichtung (DE) auf einem Benutzerauthentifizierungsgeheimnis (UAS) beruht, bei dem es sich um eine operative Antwort des Benutzers (OA) an die Vorrichtung (DE) handelt, die geheim und allein dem authentischen Benutzer (USER) bekannt und zugänglich ist, so dass die Authentizität des Benutzers (USER) nur dann erwiesen ist, wenn die Vorrichtung (DE) verifiziert, dass die vom Benutzer (AU) gegebene Antwort einerseits mit der operativen Antwort (OA) andererseits übereinstimmt.

9. Funktionale elektronische Vorrichtung (DE), die von einem Benutzer (USER) für einen bestimmten Dienst (DS) gesteuert werden kann und sensible oder vertrauliche Daten (DA) enthält, **dadurch gekennzeichnet, dass** sie für die Umsetzung des Verfahren nach einem der Ansprüche 1 bis 8 konfiguriert ist.

10. Verfahren nach einem der Ansprüche 1 bis 8, das mit einer Vielzahl elektronischer Vorrichtungen (DE) nach Anspruch 9 umgesetzt wird, die eine oder mehrere funktionale Ketten mit einer oder mehreren vorgelagerten Vorrichtungen (DE) und einer oder mehreren nachgelagerten Vorrichtungen (DE) bilden, wobei:
- wenn sich am Ende der vorhergehenden Authentifizierungsphase einer vorgelagerten Vorrichtung (DE) in einer Kette von Vorrichtungen (DE) diese Vorrichtung (DE) als authentisch erweist, die Authentifizierung der nachgelagerten Vorrichtung(en) (DE) in derselben Kette von Vorrichtungen (DE) durchgeführt wird,
- wenn sich am Ende der vorhergehenden Authentifizierungsphase einer vorgelagerten Vorrichtung (DE) in einer Kette von Vorrichtungen (DE) diese Vorrichtung (DE) nicht als authentisch erweist, die Authentifizierung der nachgelagerten Vorrichtung(en) (DE) in derselben Kette von Vorrichtungen (DE) nicht durchgeführt wird, wobei das System (ES) als nicht authentisch eingestuft wird.

## Claims

1. Method for mutual authentication of a controllable functional electronic device (DE) and its user (USER), the method comprising:
- a preliminary configuration phase (SDCP) of the device (DE) defining the terms and conditions for verifying its authenticity,
- a preliminary authentication phase (SDAP) of the device by the user (USER),
- an operational phase (OP) triggered by the user (USER) and including a preliminary user authentication step (UAP) by the device (DE), the preliminary user authentication step (UAP) by the device (DE) comprising providing an operational question to the user, receiving a response from the user, and verifying that the response provided by the user matches an expected operational response, the user (USER) then being able to command the device (DE) to provide a specific service (DS),
the device (DE) containing sensitive or confidential data (DA) and being arranged so that, in the operational phase (OP) triggered by the user (USER), it executes a specific operation (SO) appropriate for providing the service (DS),
the method comprising, prior to any operational phase (OP), a preliminary device authentication phase (SDAP),
the preliminary device authentication phase (SDAP) by the user (USER), based on a question-response authentication process, using a device authentication secret (SDAS) which is a preliminary question (PQ) from the user (USER) to the device (DE) and a preliminary response (PA) from the device (DE) to the user (USER) to the preliminary question (PQ), the preliminary question (PQ) and the preliminary answer (PR) being secret so that they are known or accessible only to the authentic user (USER), so that the authenticity of the device (DE) is proven if and only if the user (USER) verifies that there is equivalence between, on the one hand, the answer provided (ADS) by the device (DE) to the preliminary question (PQ) and, on the other hand, the preliminary answer (PA), such that:
if, at the end of the preliminary device authentication phase (SDAP), the device (DE) is proven to be authentic, the user (USER) can execute the operational phase (OP),
if, at the end of the preliminary device authentication phase (SDAP), the device (ED) is not proven to be authentic, the user (USER) can prevent the execution of the operational phase (OP), so that first the device (DE), then the user (USER), are authenticated and the operation executed and the service (DS) provided are secure,
the method further comprising the deletion, by the electronic device, of confidential data if the user has not provided the preliminary question during a predetermined number of executions of the preliminary phase of authentication of the device by the user, the electronic device then considering that the user is not the authentic user.

2. Method according to claim 1, wherein the preliminary configuration phase (SDCP) configures the device (ED) with the device authentication secret (SDAS).

3. Method according to claim 2, wherein the preliminary configuration phase (SDCP) of the device (DE) is executed by the user (USER).

4. Method according to claim 3, wherein the configuration of the device (DE) with the preliminary question (PQ) and the preliminary answer (PA) is executed based on a question from the user (USER), using a question-and-answer generator process.

5. Method according to one of claims 2 to 4, wherein the preliminary device authentication phase (SDAP) is executed after the preliminary configuration phase (SDCP) has been executed, and provided that no other preliminary device authentication phase (SDAP) or operational phase (OP) has been executed in the meantime.

6. Method according to one of claims 2 to 4, in which the preliminary device authentication phase (SDAP) is executed after the preliminary configuration phase (SDCP) has been executed, and on condition that one or more other preliminary device authentication phases (SADP) or operational phases (OP) have been executed in the meantime.

7. Method according to one of claims 2 to 4, in which a preliminary configuration phase (SDCP) is necessarily and sufficiently associated with either a single preliminary device authentication phase (SDAP), or a pre-set plurality of successive preliminary device authentication phases (SDAP), or an unlimited plurality of successive preliminary device authentication phases (SDAP).

8. Method according to one of claims 1 to 7, in which the preliminary step of authenticating the user (UAP) by the device (DE) is based on a user authentication secret (UAS) which is an operational response from the user (OA) to the device (DE), which is secret so that it is known and accessible only to the authentic user (USER), such that the authenticity of the user (USER) is proven if and only if the device (DE) verifies that there is equivalence between, on the one hand, the response provided by the user (AU) and, on the other hand, the operational response (OA).

9. Functional electronic device (DE) controllable by a user (USER) for a specific service (DS), containing sensitive or confidential data (DA), **characterized in that** it is configured to implement the method according to any of claims 1 to 8.

10. Method according to any one of claims 1 to 8, implemented with a plurality of electronic devices (DE) according to claim 9 forming one or more functional chains with one or more upstream devices (DE) and one or more downstream devices (DE), in which:
- if, at the end of the preliminary authentication phase of an upstream device (DE) in a chain of devices (DE), this device (DE) is found to be authentic, the downstream device(s) (DE) in the same chain of devices (DE) are authenticated,
- if, at the end of the preliminary authentication phase of an upstream device (DE) in a chain of devices (DE), this device (DE) is not proven to be authentic, the downstream device(s) (DE) in the same chain of devices (DE) are not authenticated, the system (ES) being proven not to be authentic.
